# EUROPÄISCHE PATENTSCHRIFT

(11) **EP 2 293 978 B1**
(45) Veröffentlichungstag und Bekanntmachung des Hinweises auf die Patenterteilung: **29.05.2019**
(21) Anmeldenummer: 09761495.2
(22) Anmeldetag: 10.06.2009
(51) Int. Cl.: B64C 23/06

(54) **VORRICHTUNG ZUR BILDUNG VON AERODYNAMISCHEN WIRBELN SOWIE STELLKLAPPE UND TRAGFLÜGEL MIT EINER VORRICHTUNG ZUR BILDUNG VON AERODYNAMISCHEN WIRBELN**
DEVICE FOR GENERATING AERODYNAMIC VORTICES, AND REGULATING FLAP AND WING COMPRISING A DEVICE FOR GENERATING AERODYNAMIC VORTICES
DISPOSITIF POUR CRÉER DES TOURBILLONS AÉRODYNAMIQUES, ET VOLET DE RÉGLAGE ET AILE COMPRENANT UN DISPOSITIF POUR CRÉER DES TOURBILLONS AÉRODYNAMIQUES

(30) Priorität: 10.06.2008 US 60210; 10.06.2008 DE 102008027618
(43) Veröffentlichungstag der Anmeldung: 16.03.2011
(73) Patentinhaber: Airbus Operations GmbH, 21129 Hamburg (DE)
(72) Erfinder: SCHABER, Sven, 28790 Schwanewede / Leuchtenburg (DE)
(74) Vertreter: Bird & Bird LLP
(86) Internationale Anmeldenummer: PCT/EP2009/004207
(87) Internationale Veröffentlichungsnummer: WO 2009/149932

(56) Entgegenhaltungen:
- WO-A-94/22713
- DE-A1- 10 313 290
- DE-A1- 19 706 668
- DE-C- 403 173
- GB-A- 565 634
- US-A- 1 466 551
- US-A- 4 132 375
- US-A- 4 671 473
- US-A1- 2007 262 205

## Beschreibung

Die Erfindung betrifft eine Vorrichtung zur Bildung von aerodynamischen Wirbeln sowie Stellklappe und Tragflügel mit einer Vorrichtung zur Bildung von aerodynamischen Wirbeln.

Moderne Verkehrsflugzeuge weisen Hochauftriebshilfen auf, um bei geringen Geschwindigkeiten während der Start- und Landephase den erforderlichen Auftrieb zu erzeugen. Aus dem allgemeinen Stand der Technik ist bekannt, dass aerodynamische Auftriebsflächen wie Hochauftriebssysteme (High-Lift Devices) und Haupt- und Nebenflügel-Vorrichtungen entweder gerade abgeschnitten oder in Flügelrandbögen gerundet oder mit sogenannten Winglets ausgestattet sind. Aufgrund der Zirkulation und des Druckausgleichs zwischen der Flügelunterseite und dem Unterdruck der Oberseite entstehen zusätzlich zur Wirbelschicht entlang der Hinterkante des Hauptflügels an den Flügelspitzen und an den Seitenrändern der Hochauftriebs-Klappen seitliche Randwirbel größerer Wirbelstärke. Diese von einem Flugzeug induzierten Randwirbel, die direkte Folge der erzeugten Zirkulation am Flügel sind, bewirken einen induzierten Widerstand und sind insbesondere bei großen Flugzeugen durch die mit diesen vorgesehenen großen Anstellwinkel und den dabei relativ weit ausgefahrenen Auftriebs-Hilfsflächen sehr stark, langlebig und gelten als Beeinträchtigung der hinter diesem Flugzeug fliegenden weiteren Flugzeuge des Flugverkehrs. Dies ist nachteilig, da eine minimale Staffelung von einen Flughafen anfliegenden Flugzeugen angestrebt wird. Besonders hinsichtlich dem Einsatz großer Flugzeuge besteht der Bedarf nach einer Verringerung der Frequenz der zeitlich hintereinander gestaffelten Maschinen beim Start und bei der Landung, um dem Streben nach größeren Passagier- und Fracht-Umschlagsleistungen der Flughäfen gerecht zu werden. Die Ausbildung der induzierten Wirbel stellt eine Reduzierung des Auftriebs und eine Widerstandsvergrößerung dar, wirkt als Lärmquelle und kann in Bodennähe sogar Beschädigungen an Bebauungen bewirken. Die Auftriebsverteilung wird durch Diskontinuitäten verschlechtert.

Die WO 94/22713, die DE 197 06 668 A1, die US 1 466 551 und die US 2007/0262205 A1 zeigen Flügelteile, die an einem Hauptflügel linear ein- und ausfahrbar sind.

In der US 1 466 551 können die Flügelteile auch auf einzelnen, eigenen Drehachsen angeordnet werden. Dadurch können sie am spannweitigen Rand des Flügels in der Flügelebene gespreizt oder zusammengefahren werden. Die US 4 132 375 beschreibt ein Flugzeug, das an seinen Flügelenden jeweils ein drehbar an diesen angelenktes Flügelverlängerungsstück aufweist.

Aus der DE 100 20 177 A1 ist eine Vorrichtung zur Bildung von aerodynamischen Wirbeln an der Seitenkante einer Hochauftriebsklappe eines Flugzeugs bekannt, wobei an der Seitenkante der Stellklappe ein Wirbelgenerator durch eine Anzahl von sich in Spannweitenrichtung erstreckenden Elementen gebildet ist, zwischen denen an der Stellklappe vorbeifließende Luft strömt. Die sich in Spannweitenrichtung erstreckenden Elemente sind länglich ausgebildet und haben die Form von bürstenähnlichen Anordnungen, die über einen oder mehrere Abschnitte der Profiltiefe der Stellklappe verlaufen.

Aus der US 3 596 854 ist ein Wirbelgenerator bekannt, welcher ein entlang der Seitenkante der Stellklappe verlaufendes röhrenförmiges Element mit einer sich zu der Rückseite der Stellklappe öffnenden Mündung umfasst, durch das an der Überdruckseite der Hochauftriebsklappe gesammelte Druckluft abgegeben wird. Der Drehsinn des Wirbels kann im Sinne einer Vergrößerung oder einer Verkleinerung der Auftriebskraft der Hochauftriebsklappe gewählt werden.

Aus der WO 03/000547 A1 ist ein Winglet für einen Tragflügel bekannt, der eine Anordnung zur Steuerung der Strömung aufweist, um den mittels des Winglets erzeugten Auftrieb in Abhängigkeit des jeweiligen Flugzustandes zu reduzieren. Hierzu ist ein Strömungskanal im Winglet vorgesehen, mittels dem die Oberseite des Winglets mit dessen Unterseite verbindbar ist, um einen Druckausgleich und dadurch eine Reduktion des von dem Winglet erzeugten Auftriebs zu ermöglichen. Der Strömungskanal erstreckt sich entlang der Spannweitenrichtung und endet innerhalb des Winglets.

Ferner ist aus der US 6,578,798 B1 eine Vorrichtung zur Widerstandsverringerung von Auftriebsklappen eines Flugzeugs bekannt, dessen Tragflügelspitze einen vorderen und einen hinteren Abschnitt aufweist. Die vorderen und hinteren Tragflügelabschnitte sind gegenüber der Spannweitenrichtung des Tragflügels mit unterschiedlichen Winkeln angestellt.

In der DE 100 52 022 A1 ist eine Anordnung zum Einsatz in turbulenten Scherschichten und Wirbelstrukturen offenbart, die eine Vielzahl von flexiblen, in Strömungsrichtung verlaufenden, haarförmigen Strukturen aufweist, deren einer Endabschnitt an einer Körperwand befestigt ist. Das freie Ende der haarförmigen Strukturen wird durch die anliegende Strömung ausgerichtet um die Wirbelbildung an Strömungsgegenständen zu verringern.

Die Aufgabe der Erfindung ist, eine Vorrichtung zur Bildung von aerodynamischen Wirbeln zur Anordnung an dem spannweitigen Seitenrand eines Haupt- oder Tragflügels oder einer an diesem verstellbar angeordneten Stellklappe sowie eine solche Stellklappe und einen Tragflügel mit einer Vorrichtung zur Bildung von aerodynamischen Wirbeln bereitzustellen, die effektiv hinsichtlich der Auftriebserhöhung bei Start und Landung des Flugzeugs ist, mit der Lande- und Start-Frequenzen von Flugzeugen an Flughäfen minimal sein können und die mit geringem Aufwand realisierbar ist.

Diese Aufgaben werden mit den Merkmalen der unabhängigen Ansprüche gelöst. Weitere Ausführungsformen sind in den auf diese rückbezogenen Ansprüchen angegeben.

Die Erfindung basiert darauf, dass an den Enden des Flügels oder der jeweiligen Stellklappe ein oder mehrere fittich- oder finger-förmige Flügelteile derart angeordnet sind, dass diese an dem Flügel bzw. der Stellklappe ein- und ausgefahren werden können. Durch das erfindungsgemäß vorgesehene zumindest eine Flügelteil wirdanstelle je eines seitlichen induzierten Randwirbels, - ein Bündel von Randwirbel erzeugt, die eine von der Stellklappe oder dem Tragflügel oder Hauptflügel abgehende Wirbelspule formen. Diese ist aus einer Vielzahl von Einzelwirbeln zusammengesetzt, die schnell dissipieren und den Widerstand bei gleichem Auftrieb senken. Der größte Vorteil rührt aus der Änderung des induzierten Widerstandes und der Erhöhung der Dissipation. Die Zerlegung des bisherigen zentralen Randwirbels in eine Wirbelspule verringert durch verstärkte Dissipation die Lebensdauer und reduziert die Wirbel-Umfangsgeschwindigkeit. Auf die Weise können die minimalen Abstände zwischen hintereinander fliegenden Flugzeugen verringert werden. Weiterhin wird das Verhältnis Auftrieb zu Widerstand deutlich verbessert. Außerdem ergeben sich Verbesserungen zur Lastverteilungsregelung am Flügel, der Böenkontrolle und für die flugmechanische Steuerbarkeit aufgrund eines verbesserten wirksamen Hebelarms, der durch das Ausfahren des zumindest einen Flügelteils erreicht wird. Durch die Erfindung erfolgt weiterhin eine schnellere Zerlegung des Randwirbels und eine größere Wirbel-Dissipation.

Weiterhin kann die Vorrichtung zur Wirbelbildung derart gestaltet ist, dass die äußeren Endabschnitte der Flügelteile in ihrem ausgefahrenen Zustand in der Dickenrichtung des Tragflügels oder der Stellklappe voneinander beabstandet sind und/oder die äußeren Endabschnitte der Flügelteile in ihrem ausgefahrenen Zustand in der Tiefenrichtung des Tragflügels oder der Stellklappe gesehen voneinander beabstandet sind.

Die Flügelteile können derart von der Stellvorrichtung geführt werden, dass die Endabschnitte an den äußeren Enden der Flügelteile im ausgefahrenen Zustand derselben in der Tiefenrichtung des Tragflügels oder der Stellklappe hintereinander gelegen sind. Die Flügelteile können insbesondere derart von der Stellvorrichtung geführt werden, dass Endabschnitte der Flügelteile im ausgefahrenen Zustand derselben in der Tiefenrichtung des Tragflügels oder der Stellklappe übereinander gelegen sind.

Bei den genannten Ausführungsformen kann für jedes Flügelteil jeweils eine Antriebsvorrichtung vorgesehen sein.

Die Stellklappe kann insbesondere eine Hochauftriebsklappe eines Tragflügels sein.

Die Stellvorrichtung kann insbesondere derart gestaltet sein, dass bei Verstellzuständen der Stellklappe innerhalb eines Verstellbereichs mit geringeren Ausfahrstellungen zumindest eines der Flügelteile ausgefahren ist und dass bei Verstellzuständen der Stellklappe innerhalb eines Verstellbereichs mit größeren Ausfahrstellungen zumindest ein weiteres der Flügelteile ausgefahren ist. Der Verstellbereich mit geringeren Ausfahrstellungen kann zwischen 0 % und 50 % des vollständigen Ausfahrbereichs der Stellklappe liegen. Zur Kopplung der Verstellzustände der Flügelteile mit dem Verstellzustand der Stellklappe kann eine mechanische Kopplungsvorrichtung vorgesehen sein.

Erfindungsgemäß kann weiterhin an der Stellklappe eine Rückführ-Mechanik angeordnet oder in dieser integriert sein, die die Ausfahrstellung der Stellklappe mechanisch koppelt mit dem Ausfahrzuständen der Flügelteile. Dabei kann weiterhin eine Aktivierungsvorrichtung vorgesehen sein, die die Rückführ-Mechanik aktiviert, wenn die Stellklappe eingefahren wird. Die Rückführ-Mechanik kann mit einer Klappen-Verstell-Kinematik mechanisch oder in anderer Weise funktional gekoppelt sein, so dass der Verstellweg oder der Verstellzustand der Klappen-Verstell-Kinematik von der Rückführ-Mechanik verwendet wird, um die Ausfahrstellung des zumindest einen Flügelteils oder einzelner Flügelteile einzustellen. Bei der Verwendung mehrerer Flügelteile kann die Antriebs-Vorrichtung jedes einzelnen Flügelteils mit der Klappen-Verstell-Kinematik mechanisch oder auf andere Weise gekoppelt sein, oder die Antriebsvorrichtungen der Flügelteile können miteinander gekoppelt sein, so dass nur eine der Antriebsvorrichtungen der Flügelteile mit der Klappen-Verstell-Kinematik gekoppelt ist, um die Ausfahrzustände mehrerer Flügelteile einzustellen.

Bei einem weiteren Ausführungsbeispiel kann die Verstellvorrichtung ein Steuermodul zur Ansteuerung der Antriebsvorrichtung der Verstellvorrichtung aufweisen, die funktional mit einer Flugsteuerungsvorrichtung des Gesamtflugzeugs in Verbindung steht und die eine Funktion zum Empfang von Kommandosignalen von der Flugsteuerungsvorrichtung und zur Erzeugung von Kommandosignalen für die Antriebsvorrichtung der Stellvorrichtung zur Betätigung derselben aufweist.

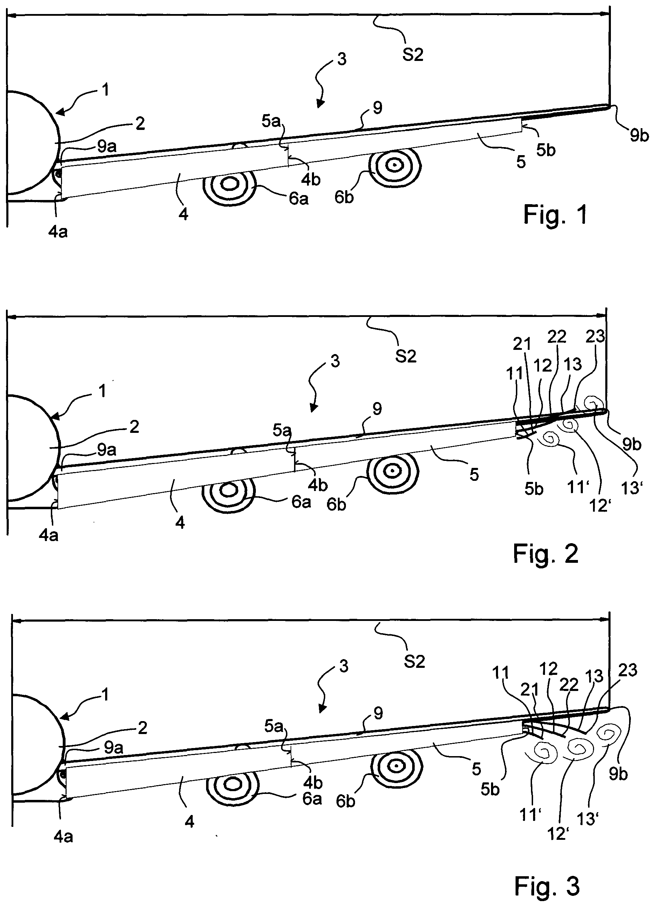

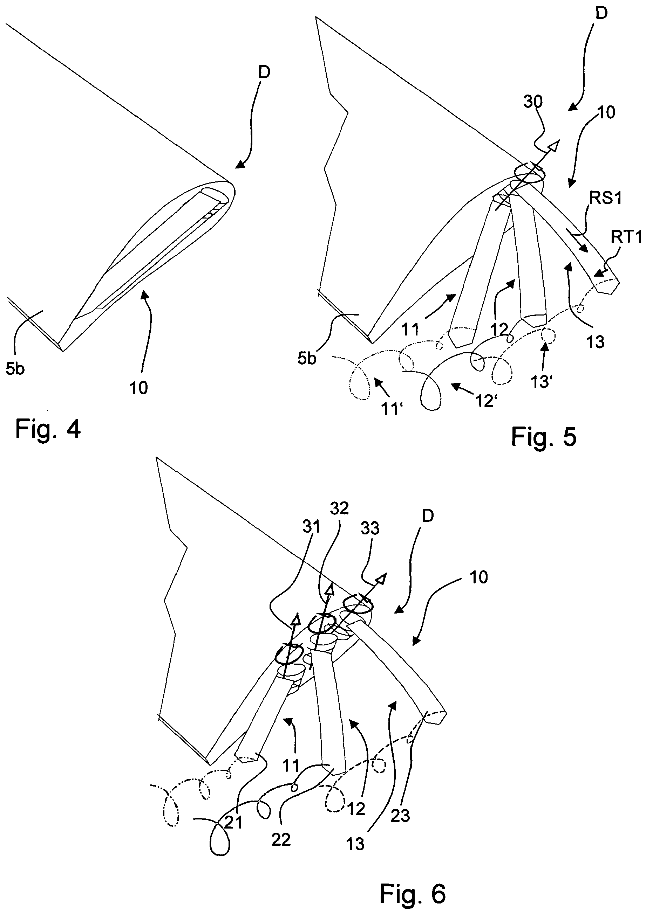

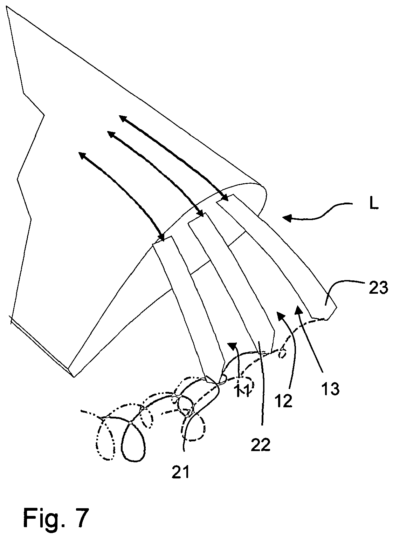

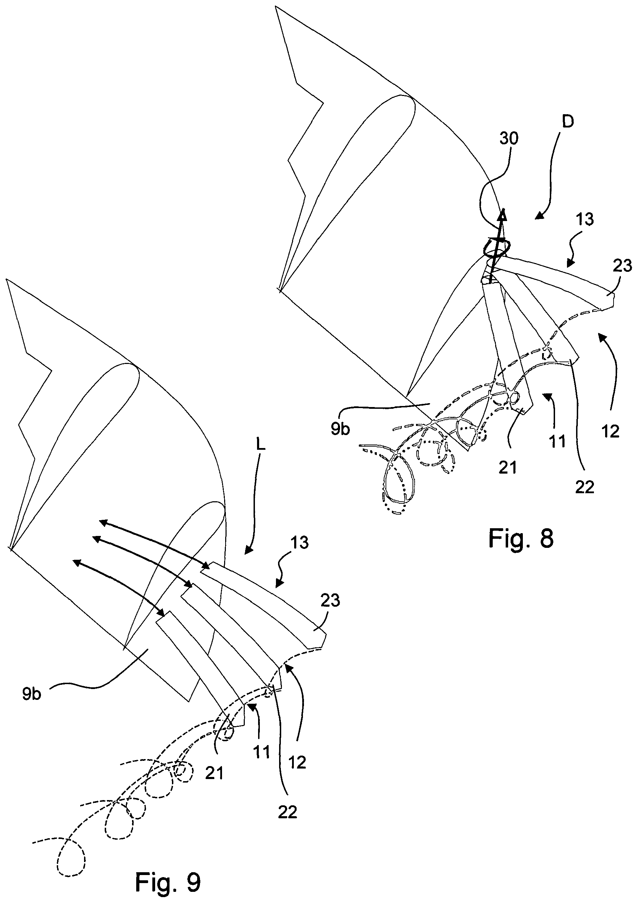

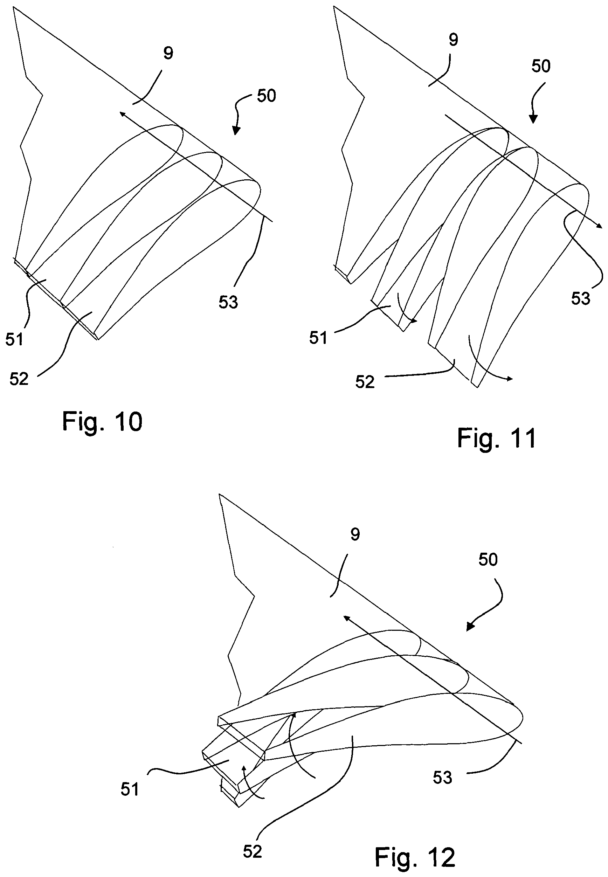

Im Folgenden werden Ausführungsbeispiele der Erfindung anhand der Zeichnung erläutert. Es zeigen:
▪ Figur 1 ein Tragflügel eines Flugzeugs hinten, d.h. in Flugrichtung gesehen, mit einer inneren und einer äußeren Hochauftriebs-Klappe jeweils in ihrem ausgefahrenen Zustand, wobei an dem dargestellten Tragflügel keine erfindungsgemäß vorgesehenen Flügelteile angeordnet sind;
▪ Figur 2 der Tragflügel mit ausgefahrenen Hochauftriebs-Klappen in der Darstellung der Figur 1, wobei an der äußeren Randbereich der äußeren Hochauftriebs-Klappe eine Ausführungsform der erfindungsgemäßen Flügelteile angeordnet sind;
▪ Figur 3 der Tragflügel mit ausgefahrenen Hochauftriebs-Klappen in der Darstellung der Figur 1, wobei an der äußeren Randbereich der äußeren Hochauftriebs-Klappe eine weitere Ausführungsform der erfindungsgemäßen Flügelteile angeordnet sind;
▪ Figur 4 ein seitlicher Endabschnitt einer Hochauftriebs-Klappe mit einer Ausführungsform der erfindungsgemäßen Vorrichtung zur Wirbelbildung, bei der drei Flügelteile vorgesehen sind und die Flügelteile mittels einer Drehlagerungsvorrichtung auf derselben Drehachse zwischen der eingefahrenen und der ausgefahrenen Stellung drehbar gelagert sind, wobei sich die Flügelteile in einem eingefahrenen Zustand befinden;
▪ Figur 5 der seitliche Endabschnitt einer Hochauftriebs-Klappe mit der Ausführungsform der erfindungsgemäßen Vorrichtung zur Wirbelbildung nach der Figur 4, wobei sich die Flügelteile in einem ausgefahrenen Zustand befinden;
▪ Figur 6 ein seitlicher Endabschnitt einer Hochauftriebs-Klappe mit einer weiteren Ausführungsform der erfindungsgemäßen Vorrichtung zur Wirbelbildung, bei der drei Flügelteile vorgesehen sind und die Flügelteile mittels einer Drehlagerungsvorrichtung auf jeweils einer eigenen Drehachse zwischen der eingefahrenen und der ausgefahrenen Stellung drehbar gelagert sind, wobei sich die Flügelteile in einem ausgefahrenen Zustand befinden;
▪ Figur 7 ein seitlicher Endabschnitt einer Hochauftriebs-Klappe mit einer nicht-erfindungsgemäßen Vorrichtung zur Wirbelbildung, bei der drei Flügelteile vorgesehen sind und bei der die Flügelteile mittels einer Linearführungs-Vorrichtung zwischen der eingefahrenen und der ausgefahrenen Stellung bewegbar gelagert sind, wobei sich die Flügelteile in einem ausgefahrenen Zustand befinden;
▪ Figur 8 ein seitlicher Endabschnitt eines Hauptflügels, an dem eine Ausführungsform der erfindungsgemäßen Vorrichtung zur Wirbelbildung mit drei Flügelteilen angeordnet ist, die Flügelteile mittels einer Drehlagerungsvorrichtung zwischen der eingefahrenen und der ausgefahrenen Stellung bewegbar gelagert sind, wobei sich die Flügelteile in einem ausgefahrenen Zustand befinden;
▪ Figur 9 ein seitlicher Endabschnitt eines Hauptflügels, an dem eine Ausführungsform der nicht-erfindungsgemäßen Vorrichtung zur Wirbelbildung mit drei Flügelteilen angeordnet ist, die Flügelteile mittels einer Linearführungs-Vorrichtung zwischen der eingefahrenen und der ausgefahrenen Stellung bewegbar gelagert sind, wobei sich die Flügelteile in einem ausgefahrenen Zustand befinden;
▪ Figur 10 ein seitlicher Endabschnitt eines Hauptflügels, an dem eine Ausführungsform einer nicht-erfindungsgemäßen Vorrichtung zur Wirbelbildung mit zwei Flügelsegmenten angeordnet ist, die an einer gemeinsamen Drehachse drehbar gelagert sind, wobei sich die Flügelsegmente in einer Ausgangsstellung oder einem neutralen Verstell-Zustand befinden;
▪ Figur 11 der seitliche Endabschnitt des Hauptflügels mit der Ausführungsform der Vorrichtung zur Wirbelbildung nach der Figur 10, wobei sich die Segmente in einem ersten Verstellzustand befinden;
▪ Figur 12 der seitliche Endabschnitt des Hauptflügels mit der Ausführungsform der Vorrichtung zur Wirbelbildung nach der Figur 10, wobei sich die Segmente in einem weiteren Verstellzustand befinden.

Die Figur 1 zeigt ein Flugzeug 1 mit einem Rumpf 2 und einen Tragflügel 3 von hinten und in Flugrichtung oder in der Längsachse des Flugzeugs gesehen. In dieser Blickrichtung ist somit der rechte der beiden Tragflügel des Flugzeugs mit der halben Spannweite S2 gezeigt. An dem Hauptflügel 9 des gezeigten Tragflügels 3 ist eine innere 4 und eine äußere 5 Hochauftriebs-Klappe jeweils in ihrem ausgefahrenen Zustand sowie zwei Triebwerks-Gondeln 6a, 6b dargestellt. Die innere und die äußere Hochauftriebs-Klappe 4, 5 hat jeweils ein dem Rumpf 2 zugewandtes inneres Ende 4a bzw. 5a und ein dem Rumpf 2 abgewandtes oder der Flügelspitze 7 zugewandtes äußeres Ende 4b bzw. 5b. Ebenso hat der Hauptflügel 9 ein äußeres, entgegengesetzt zu dem rumpfseitigen Ende 9a des Hauptflügels 9 gelegenes äußeres Ende 9b. Der Begriff "Ende" wird in diesem Zusammenhang für den spannweitigen Seitenrand der Kontur der Hochauftriebs-Klappe 4, 5 bzw. des Hauptflügels 9 verwendet.

Nach der Erfindung ist an dem spannweitigen Seitenrand eines Tragflügels oder an einer an diesem verstellbar angeordneten Stellklappe, die insbesondere eine Hochauftriebs-Klappe 4, 5 sein kann, eine Vorrichtung 10 zur Bildung von aerodynamischen Wirbeln angeordnet, die aus zumindest einem Flügelteil 11, 12, 13 gebildet ist. In den Figuren 2 bis 7 sind Flügelteile 11, 12, 13 als an einer Hochauftriebs-Klappe, und zwar an dessen der Flügelspitze zugewandten Randbereich 5b beispielsweise dargestellt. Die erfindungsgemäße Vorrichtung zur Wirbelbildung kann alternativ oder zusätzlich an jeder Art von Stellklappen und dabei an seinem inneren und/oder äußeren Randbereich angeordnet sein. In den Figuren 2 und 3 sind von den Flügelteilen 11, 12, 13 abgehende Wirbel symbolisch dargestellt und mit den Bezugszeichen 11', 12', 13' versehen. Die Flügelteile sind fittichartige Strömungskörper mit einem aerodynamischen Profil, das eine Spannweiten-Richtung RS1 und eine Flügeltiefen-Richtung RT1 hat (Figur 5). Die Flügelteile haben eine Flügelform und sind vorzugsweise in Spannweiten-Richtung RS1 länglich gebildet. In der Spannweiten-Richtung RS1 gesehen können die Flügelteile 11, 12, 13 gerade oder gebogen geformt sein.

In den Figuren 2 bis 9 sind die dort dargestellten Vorrichtungen 10 zur Wirbelbildung jeweils drei Flügelteile 11, 12, 13 auf, die mit denselben Bezugszeichen versehen sind, auch wenn diese zu verschiedenen Ausführungsformen gehören.

In den Figuren 2 bis 9 ist die Vorrichtung 10 zur Wirbelbildung jeweils mit drei Flügelteilen 11, 12, 13 dargestellt. Generell kann die Vorrichtung 10 zur Bildung von aerodynamischen Wirbeln nach der Erfindung die auch nur aus einem Flügelteil gebildet sein. Bei der Bildung der Vorrichtung 10 aus einem Flügelteil ist dieses als gegenüber dem Tragflügel oder der Stellklappe in deren Spannweitenrichtung bewegbares Teil ausgebildet. Wenn die Vorrichtung 10 zur Wirbelbildung aus mehreren Flügelteilen 11, 12, 13 gebildet ist, ist die Vorrichtung 10 derart gestaltet, dass die Flügelteile 11, 12, 13 als gegenüber dem Tragflügel 9 oder der Stellklappe 4, 5 in deren Spannweitenrichtung und zueinander bewegbare Teile ausgebildet sind, deren äußere Endabschnitte im ausgefahrenen Zustand der Flügelteile in deren Dickenrichtung des Tragflügels oder der Stellklappe voneinander beabstandet sind, und dass an dem jeweiligen spannweitigen Rand des Tragflügels oder der Stellklappe eine Ausnehmung zur Aufnahme der Flügelteile ausgebildet ist und die Vorrichtung (10) zur Wirbelbildung eine Stellvorrichtung zum Ein- und Ausfahren der Flügelteile in die Ausnehmung sowie eine Antriebsvorrichtung zur Betätigung der Stellvorrichtung aufweist. Dabei kann die Vorrichtung 10 zur Wirbelbildung insbesondere derart gestaltet sein, dass die äußeren Endabschnitte der Flügelteile in ihrem ausgefahrenen Zustand in der Dickenrichtung des Tragflügels oder der Stellklappe voneinander beabstandet sind und/oder die äußeren Endabschnitte der Flügelteile in ihrem ausgefahrenen Zustand in der Tiefenrichtung des Tragflügels oder der Stellklappe gesehen voneinander beabstandet sind.

Die Vorrichtung 10 zur Wirbelbildung bzw. die Stellklappe 4, 5 oder der Hauptflügel 9 weist eine Stellvorrichtung zum Ein- und Ausfahren des einen Flügelteils oder der Flügelteile auf, die von eine Antriebsvorrichtung (nicht gezeigt) angetrieben, d.h. betätigt wird. Die Stellvorrichtung weist insbesondere eine Verstellkinematik und eine Führungsvorrichtung auf, durch die die Einfahr- und Ausfahr-Bewegung des Flügelteils oder der Flügelteile 11, 12, 13 bestimmt ist. Die Stellvorrichtung kann insbesondere eine Linearführungs-Vorrichtung insbesondere in Form einer Schlitten-Track-Kinematik zum linearen Ein- und Ausfahren des zumindest einen Flügelteils oder der Flügelteile 11, 12, 13 aufweisen. Alternativ kann die Stellvorrichtung eine Drehlagerungsvorrichtung aufweisen, an der das zumindest eine Flügelteil oder die Flügelteile 11, 12, 13 zwischen der eingefahrenen und der ausgefahrenen Stellung drehbar gelagert ist bzw. sind.

Bei der Bildung der Vorrichtung 10 zu Wirbelbildung aus mehreren Flügelteilen 11, 12, 13 können diese derart von der Linearführungs-Vorrichtung bzw. von der Drehlagerungsvorrichtung geführt werden, dass Endabschnitte 21, 22, 23 der Flügelteile 11, 12, 13 im ausgefahrenen Zustand derselben in der Tiefenrichtung des Tragflügels oder der Stellklappe hintereinander gelegen sind, wie dies in den Figuren 5 bis 9 dargestellt ist. Weiterhin können diese in ihrem teilweise oder ganz ausgefahrenen Zustand ausgehend vom jeweiligen Ende oder Randbereich der Stellklappe 4, 5 bzw. des Hauptflügels 9 in ihrer Spannweitenrichtung RS1 nach oben (Figur 2) oder nach unten (Figur 3) verlaufen. Weiterhin kann vorgesehen sein, das die äußeren Endabschnitte 21, 22, 23 der Flügelteile 11, 12, 13 in ihrem teilweise oder ganz ausgefahrenen Zustand in der Dickenrichtung des Tragflügels oder der Stellklappe voneinander beabstandet sind, wie dies in den Figuren 2 und 3 gezeigt ist. Weiterhin kann die Vorrichtung 10 zur Bildung von aerodynamischen Wirbeln derart ausgebildet und können die Flügelteile 11, 12, 13, derart von der Stellvorrichtung geführt werden, dass die Endabschnitte 21, 22, 23 oder die äußeren Enden der Flügelteile 11, 12, 13 in deren ganz oder teilweise ausgefahrenem Zustand derselben in der Tiefenrichtung des Tragflügels oder der Stellklappe hintereinander (Figuren 5 bis 9) und/oder übereinander (Figuren 5, 6, und 8) gelegen sind.

Der Hauptflügel 9 bzw. die Stellklappe 4, 5, an der die Vorrichtung 10 angeordnet ist, kann eine Vertiefung oder einen Hohlraum oder eine Ausnehmung aufweisen, in die die Flügelteile 11, 12, 13 einfahrbar sind.

Die Stellvorrichtung zur Verstellung der Flügelteile 11, 12, 13 kann derart gestaltet sein, dass die Verstellzustände des zumindest einen Flügelteils 11, 12, 13 mit dem Verstellzustand der Stellklappe 4, 5 gekoppelt sind, wobei bei einem eingefahrenen Zustand der Stellklappe 4, 5 sich das zumindest eine Flügelteil 11, 12, 13 in einem eingefahrenen Zustand befindet und wobei bei einem ausgefahrenen Zustand der Stellklappe 4, 5 sich das zumindest eine Flügelteil 11, 12, 13 in einem ausgefahrenen Zustand befindet.

Dabei kann weiterhin die Stellvorrichtung derart gestaltet sein, dass bei Verstellzuständen der Stellklappe innerhalb eines Verstellbereichs mit geringeren Ausfahrstellungen zumindest eines der Flügelteile 11, 12, 13 ausgefahren ist und dass bei Verstellzuständen der Stellklappe innerhalb eines Verstellbereichs mit größeren Ausfahrstellungen zumindest ein weiteres der Flügelteile 11, 12, 13 ausgefahren ist. Bei dieser Ausführungsform der Vorrichtung 10 ist ein passives Aus- und Einfahren des zumindest einen Flügelteils realisiert. Zur Kopplung der Verstellzustände der Flügelteile 11, 12, 13 mit dem Verstellzustand der Stellklappe 4, 5 kann eine mechanische Kopplungsvorrichtung vorgesehen sein.

Bei einer weiteren Ausführungsform der erfindungsgemäßen Vorrichtung 10 zur Wirbelbildung kann an der Stellklappe 4, 5 eine Rückführ-Mechanik angeordnet sein, die die Ausfahrstellung der Stellklappe 4, 5 mechanisch koppelt mit dem Ausfahrzuständen der Flügelteile 11, 12, 13. Dabei ist weiterhin eine Aktivierungsvorrichtung vorgesehen, die die Rückführ-Mechanik aktiviert, wenn die Stellklappe 4, 5 eingefahren wird.

Bei einer weiteren Ausführungsform der erfindungsgemäßen Vorrichtung 10 zur Wirbelbildung kann vorgesehen sein, dass die Verstellvorrichtung ein Steuermodul zur Ansteuerung der Antriebsvorrichtung der Verstellvorrichtung aufweist, die funktional mit einer Flugsteuerungsvorrichtung des Gesamtflugzeugs in Verbindung steht und die eine Funktion zum Empfang von Kommandosignalen von der Flugsteuerungsvorrichtung und zur Erzeugung von Kommandosignalen für die Antriebsvorrichtung der Stellvorrichtung zur Betätigung derselben aufweist. Auf diese Weise ist ein aktives Verstellen des zumindest einen Flügelteils 11, 12, 13 realisiert. Nach einer weiteren Ausführungsform der Erfindung ist ein Tragflügel oder ein Hauptflügel 9 vorgesehen, der an seinem am spannweitigen Ende gelegenen Seitenrand zumindest zwei Flügelsegmente 51, 52 aufweist, wobei:
▪ die Flügelsegmente 51, 52 in Spannweitenrichtung gesehen jeweils hintereinander und hinter dem Tragflügel gelegen sind und deren äußere Kontur derart gebildet ist, dass diese die Kontur des Hauptflügels in der Spannweitenrichtung zu einem Gesamtflügel weiterbildet, wobei die Flügelsegmente 51, 52 an einer gemeinsamen Drehachse 53 drehbar gelagert sind und
▪ jedes Segment 51, 52 mit jeweils einer Antriebsvorrichtung gekoppelt ist, mit der jedes Segment unabhängig von den jeweils anderen Segmenten verstellt werden kann.

Die Figur 10 zeigt einen seitlichen Endabschnitt eines Hauptflügels 9, an dem eine Vorrichtung 50 zur Wirbelbildung mit zwei Flügelsegmenten 51, 52 angeordnet ist, die an einer gemeinsamen Drehachse 53 drehbar gelagert sind, wobei sich die Flügelsegmente in einer Ausgangsstellung oder einem neutralen Verstell-Zustand befinden. In der Figur 11 zeigt die Segmente 51, 52 in einem weiteren Verstellzustand und die Figur 12 zeigt die Segmente 51, 52 in einem weiteren Verstellzustand.

In analoger Weise kann die zuvor beschriebene Anordnung aus Flügelsegmenten auch an einer Stellklappe und insbesondere einer Hochauftriebs-Klappe angeordnet sein. Erfindungsgemäß ist also auch eine Stellklappe vorgesehen, die an zumindest einem Seitenrand ihrer spannweitigen Enden zumindest zwei Flügelsegmente aufweist. Dabei sind die Flügelsegmente 51, 52 in Spannweitenrichtung gesehen jeweils hintereinander und hinter der Stellklappe 4, 5 gelegen. Deren äußere Kontur ist derart gebildet, dass diese die Kontur des Hauptflügels in der Spannweitenrichtung zu einem Gesamtflügel weiterbilden, wobei die Flügelsegmente 51, 52 an einer gemeinsamen Drehachse 53 drehbar gelagert sind. Weiterhin ist dabei jedes Segment 51, 52 mit jeweils einer Antriebsvorrichtung gekoppelt, mit der jedes Segment 51, 52 unabhängig von den jeweils anderen Segmenten 52, 51 verstellt werden kann.

## Patentansprüche

1. Stellklappe (4, 5) eines Tragflügels (3), wobei die Stellklappe (4, 5) eine Vorrichtung zur Bildung von aerodynamischen Wirbeln aufweist, **dadurch gekennzeichnet,**
• **dass** die Vorrichtung zur Wirbelbildung mehrere bewegbar an der Stellklappe (4, 5) angeordnete Flügelteile (11, 12, 13) sowie eine Drehlagerungsvorrichtung (D) aufweist, mit der die Flügelteile (10) an der Stellklappe (4, 5) zwischen einer eingefahrenen und einer ausgefahrenen Stellung drehbar gelagert sind, und
• **dass** die mehreren Flügelteile (11, 12, 13) auf derselben Drehachse (30) angeordnet sind oder dass die mehreren Flügelteile (11, 12, 13) jeweils auf einer eigenen Drehachse (31, 32, 33) angeordnet sind, wobei an dem spannweitigen Rand der Stellklappe (4, 5) eine Ausnehmung zur Aufnahme der Flügelteile (11, 12, 13) ausgebildet ist und die Vorrichtung (10) zur Wirbelbildung eine Stellvorrichtung zum Ein- und Ausfahren der Flügelteile (11, 12, 13) in die Ausnehmung sowie eine Antriebsvorrichtung zur Betätigung der Stellvorrichtung aufweist.

2. Stellklappe (4, 5) nach Anspruch 1, **dadurch gekennzeichnet, dass** die Vorrichtung (10) zur Wirbelbildung derart gestaltet ist, dass die äußeren Endabschnitte der Flügelteile (11, 12, 13) in ihrem ausgefahrenen Zustand in der Dickenrichtung der Stellklappe (4, 5) voneinander beabstandet sind und/oder die äußeren Endabschnitte der Flügelteile (11, 12, 13) in ihrem ausgefahrenen Zustand in der Tiefenrichtung der Stellklappe (4, 5) gesehen voneinander beabstandet und insbesondere in Tiefenrichtung hintereinander gelegen sind.

3. Stellklappe (4, 5) nach einem der voranstehenden Ansprüche, **dadurch gekennzeichnet, dass** die Flügelteile (11, 12, 13) derart von der Stellvorrichtung geführt werden, dass Endabschnitte (21, 22, 23) der Flügelteile (11, 12, 13) im ausgefahrenen Zustand derselben in der Tiefenrichtung der Stellklappe (4, 5) übereinander gelegen sind.

4. Stellklappe (4, 5) nach einem der voranstehenden Ansprüche, **dadurch gekennzeichnet, dass** für jedes Flügelteil jeweils eine Antriebsvorrichtung vorgesehen ist.

5. Stellklappe (4, 5) nach einem der vorstehenden Ansprüche, **dadurch gekennzeichnet, dass** die Stellklappe (4, 5) eine Hochauftriebsklappe eines Tragflügels ist.

6. Tragflügel (3) für ein Flugzeug mit einem Hauptflügel (9) und einer an diesem verstellbar angeordneten Stellklappe (4, 5), wobei der Hauptflügel (9) eine Vorrichtung (10) zur Bildung von aerodynamischen Wirbeln aufweist, die am spannweitigen Seitenrand des Hauptflügels (9) angeordnet ist, wobei
• die Vorrichtung zur Wirbelbildung mehrere bewegbar an dem Hauptflügel (9) angeordnete Flügelteile (10) sowie eine Stellvorrichtung mit einer Drehlagerungsvorrichtung (D) aufweist, mit der die Flügelteile (10) an dem Hauptflügel (9) zwischen einer eingefahrenen und einer ausgefahrenen Stellung drehbar gelagert sind, wobei die Flügelteile (10) im eingefahrenen Zustand abschnittsweise innerhalb der Kontur des Hauptflügels (9) gelegen sind, und
• die mehreren Flügelteile (11, 12, 13) auf derselben Drehachse (30) angeordnet sind oder die mehreren Flügelteile (11, 12, 13) jeweils auf einer eigenen Drehachse (31, 32, 33) angeordnet sind, wobei die Stellvorrichtung zur Verstellung der Flügelteile (11, 12, 13) derart gestaltet ist, dass die Verstellzustände der Flügelteile (11, 12, 13) mit dem Verstellzustand der Stellklappe (4, 5) gekoppelt sind, wobei bei einem eingefahrenen Zustand der Stellklappe (4, 5) sich die Flügelteile (11, 12, 13) in einem eingefahrenen Zustand befinden und wobei bei einem ausgefahrenen Zustand der Stellklappe (4, 5) sich die Flügelteile (11, 12, 13) in einem ausgefahrenen Zustand befinden.

7. Tragflügel (3) nach dem Anspruch 6, **dadurch gekennzeichnet, dass** die Stellvorrichtung derart gestaltet ist, dass bei Verstellzuständen der Stellklappe innerhalb eines Verstellbereichs mit geringeren Ausfahrstellungen zumindest eines der Flügelteile (11, 12, 13) ausgefahren ist und dass bei Verstellzuständen der Stellklappe innerhalb eines Verstellbereichs mit größeren Ausfahrstellungen zumindest ein weiteres der Flügelteile (11, 12, 13) ausgefahren ist.

8. Tragflügel (3) zur Wirbelbildung nach dem Anspruch 7, **dadurch gekennzeichnet, dass** der Verstellbereich mit geringeren Ausfahrstellungen zwischen 0 % und 50 % des vollständigen Ausfahrbereichs der Stellklappe liegt.

9. Tragflügel (3) zur Wirbelbildung nach einem der Ansprüche 6 bis 8, **dadurch gekennzeichnet, dass** zur Kopplung der Verstellzustände der Flügelteile (11, 12, 13) mit dem Verstellzustand der Stellklappe (4, 5) eine mechanische Kopplungsvorrichtung vorgesehen ist.

10. Tragflügel (3) zur Wirbelbildung nach einem der Ansprüche 6 bis 9, **dadurch gekennzeichnet, dass** an der Stellklappe (4, 5) angeordnet ist: eine Rückführ-Mechanik, die die Ausfahrstellung der Stellklappe (4, 5) mechanisch koppelt mit den Ausfahrzuständen der Flügelteile (11, 12, 13), und eine Aktivierungsvorrichtung, die die Rückführ-Mechanik aktiviert, wenn die Stellklappe (4, 5) eingefahren wird.

11. Tragflügel (3) zur Wirbelbildung nach einem der Ansprüche 6 bis 8, **dadurch gekennzeichnet, dass** die Verstellvorrichtung ein Steuermodul zur Ansteuerung der Antriebsvorrichtung der Verstellvorrichtung aufweist, die funktional mit einer Flugsteuerungsvorrichtung des Gesamtflugzeugs in Verbindung steht und die eine Funktion zum Empfang von Kommandosignalen von der Flugsteuerungsvorrichtung und zur Erzeugung von Kommandosignalen für die Antriebsvorrichtung der Stellvorrichtung zur Betätigung derselben aufweist.

12. Tragflügel (3) nach einem der Ansprüche 6 bis 11, **dadurch gekennzeichnet, dass** die Flügelteile (11, 12, 13) derart von der Stellvorrichtung geführt werden, dass die Endabschnitte (21, 22, 23) an den äußeren Enden der Flügelteile (11, 12, 13) im ausgefahrenen Zustand derselben in der Tiefenrichtung des Tragflügels oder der Stellklappe (4, 5) hintereinander oder übereinander gelegen oder in der Dickenrichtung des Tragflügels (3) voneinander beabstandet sind.

## Claims

1. Regulating flap (4, 5) of a wing (3), the regulating flap (4, 5) having a device for forming aerodynamic vortices, **characterized**
• **in that** the device for forming vortices has a plurality of wing parts (11, 12, 13), movably arranged on the regulating flap (4, 5), and also a rotational mounting device (D), with which the wing parts (10) are mounted on the regulating flap (4, 5) rotatably between a retracted position and an extended position, and
• **in that** the plurality of wing parts (11, 12, 13) are arranged on the same axis of rotation (30) or in that the plurality of wing parts (11, 12, 13) are respectively arranged on an own axis of rotation (31, 32, 33), wherein a recess for receiving the wing parts (11, 12, 13) is formed on the spanwise edge of the regulating flap (4, 5) and the device (10) for forming vortices has a regulating device for moving the wing parts (11, 12, 13) in and out of the recess and also a drive device for actuating the regulating device.

2. Regulating flap (4, 5) according to Claim 1, **characterized in that** the device (10) for forming vortices is designed in such a way that the outer end portions of the wing parts (11, 12, 13) in their extended state are spaced apart from one another in the direction of the thickness of the regulating flap (4, 5) and/or the outer portions of the wing parts (11, 12, 13) in their extended state are spaced apart from one another, seen in the direction of the depth of the regulating flap (4, 5), and in particular are disposed one behind the other in the direction of the depth.

3. Regulating flap (4, 5) according to one of the preceding claims, **characterized in that** the wing parts (11, 12, 13) are guided by the regulating device in such a way that end portions (21, 22, 23) of the wing parts (11, 12, 13) in the extended state of the same are disposed one on top of the other in the direction of the depth of the regulating flap (4, 5).

4. Regulating flap (4, 5) according to one of the preceding claims, **characterized in that** a drive device is respectively provided for each wing part.

5. Regulating flap (4, 5) according to one of the preceding claims, **characterized in that** the regulating flap (4, 5) is a high-lift flap of a wing.

6. Wing (3) for an aircraft comprising a main wing (9) and a regulating flap (4, 5) adjustably arranged on the latter, wherein the main wing (9) has a device (10) for forming aerodynamic vortices, which is arranged on the spanwise side edge of the main wing (9), wherein
• the device for forming vortices has a plurality of wing parts (10), movably arranged on the main wing (9), and also a regulating device with a rotational mounting device (D), with which the wing parts (10) are mounted on the main wing (9) rotatably between a retracted position and an extended position, wherein the wing parts (10) in the retracted state are partly disposed within the contour of the main wing (9), and
• the plurality of wing parts (11, 12, 13) are arranged on the same axis of rotation (30) or the plurality of wing parts (11, 12, 13) are respectively arranged on an own axis of rotation (31, 32, 33), wherein the regulating device for adjusting the wing parts (11, 12, 13) is designed in such a way that the adjusting states of the wing parts (11, 12, 13) are coupled to the adjusting state of the regulating flap (4, 5), wherein, in a retracted state of the regulating flap (4, 5), the wing parts (11, 12, 13) are in a retracted state and wherein, in an extended state of the regulating flap (4, 5), the wing parts (11, 12, 13) are in an extended state.

7. Wing (3) according to Claim 6, **characterized in that** the regulating device is designed in such a way that, in the case of adjusting states of the regulating flap within an adjusting range with lesser extended positions, at least one of the wing parts (11, 12, 13) is extended and that, in the case of adjusting states of the regulating flap within an adjusting range with greater extended positions, at least one more of the wing parts (11, 12, 13) is extended.

8. Wing (3) for forming vortices according to Claim 7, **characterized in that** the adjusting range with lesser extended positions lies between 0% and 50% of the full extended range of the regulating flap.

9. Wing (3) for forming vortices according to one of Claims 6 to 8, **characterized in that** a mechanical coupling device is provided for coupling the adjusting states of the wing parts (11, 12, 13) to the adjusting state of the regulating flap (4, 5).

10. Wing (3) for forming vortices according to one of Claims 6 to 9, **characterized in that** on the regulating flap (4, 5) there is arranged: a return mechanism, which mechanically couples the extended position of the regulating flap (4, 5) to the extended states of the wing parts (11, 12, 13), and an activating device, which activates the return mechanism when the regulating flap (4, 5) is retracted.

11. Wing (3) for forming vortices according to one of Claims 6 to 8, **characterized in that** the adjusting device has a control module for activating the drive device of the adjusting device, which is functionally in connection with a flight control device of the aircraft as a whole and which has a function for receiving command signals from the flight control device and for generating command signals for the drive device of the regulating device for actuation of the same.

12. Wing (3) according to one of Claims 6 to 11, **characterized in that** the wing parts (11, 12, 13) are guided by the regulating device in such a way that the end portions (21, 22, 23) at the outer ends of the wing parts (11, 12, 13) in the extended state of the same are disposed one behind the other or one on top or the other in the direction of the depth of the wing of the regulating flap (4, 5) or are spaced apart from one another in the direction of the thickness of the wing (3).

## Revendications

1. Volet de réglage (4, 5) d'une aile (3), dans lequel le volet de réglage (4, 5) présente un dispositif pour créer des tourbillons aérodynamiques, **caractérisé en ce que**
• le dispositif de création de tourbillons présente plusieurs parties d'aile (11, 12, 13) disposées de façon mobile sur le volet de réglage (4, 5), ainsi qu'un dispositif d'appui rotatif (D), avec lequel les parties d'aile (10) sont montées sur le volet de réglage (4, 5) de façon rotative entre une position rentrée et une position déployée, et
• les multiples parties d'aile (11, 12, 13) sont disposées sur le même axe de rotation (30) ou les multiples parties d'aile (11, 12, 13) sont disposées chacune sur un axe de rotation propre (31, 32, 33), dans lequel un évidement destiné à contenir les parties d'aile (11, 12, 13) est formé sur le bord dans le sens de l'envergure du volet de réglage (4, 5) et le dispositif (10) de création de tourbillons présente un dispositif de réglage pour la rentrée et le déploiement des parties d'aile (11, 12, 13) dans l'évidement ainsi qu'un dispositif d'entraînement pour l'actionnement du dispositif de réglage.

2. Volet de réglage (4, 5) selon la revendication 1, **caractérisé en ce que** le dispositif (10) de création de tourbillons est configuré de telle manière que les parties d'extrémité extérieures des parties d'aile (11, 12, 13) dans leur état déployé soient espacées l'une de l'autre dans la direction de l'épaisseur du volet de réglage (4, 5) et/ou que les parties d'extrémité extérieures des parties d'aile (11, 12, 13) dans leur état déployé, vues dans la direction de la profondeur du volet de réglage (4, 5), soient espacées l'une de l'autre et en particulier soient situées l'une derrière l'autre dans la direction de la profondeur.

3. Volet de réglage (4, 5) selon l'une quelconque des revendications précédentes, **caractérisé en ce que** les parties d'aile (11, 12, 13) sont guidées par le dispositif de réglage de telle manière que des parties d'extrémité (21, 22, 23) des parties d'aile (11, 12, 13), dans l'état déployé de celles-ci, soient situées l'une au-dessus de l'autre dans la direction de la profondeur du volet de réglage (4, 5).

4. Volet de réglage (4, 5) selon l'une quelconque des revendications précédentes, **caractérisé en ce qu'**il est prévu chaque fois un dispositif d'entraînement pour chaque partie d'aile.

5. Volet de réglage (4, 5) selon l'une quelconque des revendications précédentes, **caractérisé en ce que** le volet de réglage (4, 5) est un volet de haute sustentation d'une aile.

6. Aile (3) pour un avion avec une aile principale (9) et un volet de réglage (4, 5) disposé de façon réglable sur celle-ci, dans laquelle l'aile principale (9) présente un dispositif (10) pour créer des tourbillons aérodynamiques, qui est disposé sur le bord latéral dans le sens de l'envergure de l'aile principale (9), dans laquelle
• le dispositif de création de tourbillons présente plusieurs parties d'aile (10) disposées de façon mobile sur l'aile principale (9) ainsi qu'un dispositif de réglage avec un dispositif d'appui rotatif (D), avec lequel les parties d'aile (10) sont montées sur l'aile principale (9) de façon rotative entre une position rentrée et une position déployée, dans laquelle les parties d'aile (10) dans l'état rentré sont situées localement à l'intérieur du contour de l'aile principale (9), et
• les multiples parties d'aile (11, 12, 13) sont disposées sur le même axe de rotation (30) ou les multiples parties d'aile (11, 12, 13) sont disposées chacune sur un axe de rotation propre (31, 32, 33), dans laquelle le dispositif de réglage pour le réglage des parties d'aile (11, 12, 13) est configuré de telle manière que les états de réglage des parties d'aile (11, 12, 13) soient couplés à l'état de réglage du volet de réglage (4, 5), dans laquelle, dans un état rentré du volet du réglage (4, 5), les parties d'aile (11, 12, 13) se trouvent dans un état rentré et dans laquelle, dans un état déployé du volet de réglage (4, 5), les parties d'aile (11, 12, 13) se trouvent dans un état déployé.

7. Aile (3) selon la revendication 6, **caractérisée en ce que** le dispositif de réglage est configuré de telle manière que dans des états de réglage du volet de réglage à l'intérieur d'une plage de réglage avec de plus petites positions de déploiement au moins une des parties d'aile (11, 12, 13) soit déployée et que dans des états de réglage du volet de réglage à l'intérieur d'une plage de réglage avec de plus grandes positions de déploiement au moins une autre des parties d'aile (11, 12, 13) soit déployée.

8. Aile (3) pour créer des tourbillons selon la revendication 7, **caractérisée en ce que** la plage de réglage avec de plus petites positions de déploiement se situe entre 0 % et 50 % de la plage de déploiement totale.

9. Aile (3) pour créer des tourbillons selon l'une quelconque des revendications 6 à 8, **caractérisée en ce qu'**il est prévu un dispositif de couplage mécanique pour le couplage des états de réglage des parties d'aile (11, 12, 13) à l'état de réglage du volet de réglage (4, 5).

10. Aile (3) pour créer des tourbillons selon l'une quelconque des revendications 6 à 9, **caractérisée en ce qu'**il se trouve sur le volet de réglage (4, 5): un mécanisme de retour, qui couple mécaniquement la position déployée du volet de réglage (4, 5) aux états déployés des parties d'aile (11, 12, 13), et un dispositif d'activation, qui active le mécanisme de retour, lorsque l'on rentre le volet de réglage (4, 5).

11. Aile (3) pour créer des tourbillons selon l'une quelconque des revendications 6 à 8, **caractérisée en ce que** le dispositif de réglage présente un module de commande pour commander le dispositif d'entraînement du dispositif de réglage, qui est en liaison fonctionnelle avec un dispositif de commande de vol de l'avion entier et qui présente une fonction permettant de recevoir des signaux de commande provenant du dispositif de commande de vol et de produire des signaux de commande pour le dispositif d'entraînement du dispositif de réglage pour l'actionnement de celui-ci.

12. Aile (3) selon l'une quelconque des revendications 6 à 11, **caractérisée en ce que** les parties d'aile (11, 12, 13) sont guidées par le dispositif de réglage, de telle manière que les parties d'extrémité (21, 22, 23) aux extrémités extérieures des parties d'aile (11, 12, 13), dans l'état déployé de celles-ci, soient situées l'un derrière l'autre ou l'une au-dessus de l'autre dans la direction de la profondeur de l'aile ou du volet de réglage (4, 5) ou soient espacées l'une de l'autre dans la direction de l'épaisseur de l'aile (3).
